# EUROPÄISCHE PATENTSCHRIFT

(11) **EP 1 069 544 B1**
(45) Veröffentlichungstag und Bekanntmachung des Hinweises auf die Patenterteilung: **26.05.2004**
(21) Anmeldenummer: 00440193.1
(22) Anmeldetag: 30.06.2000
(51) Int. Cl.: G08G 1/0968

(54) **Verfahren zur Positionsüberwachung eines Mobilfunkteilnehmers sowie Netzwerkszugangsserver zur Durchführung des Verfahrens**
Method to control the position of a mobile phone user and the network access server to carry out the method
Procédé de contrôle de la position d'un possesseur d'un téléphone portable ainsi que le fournisseur d'accès au réseau pour la mise en oeuvre du procédé

(30) Priorität: 14.07.1999 DE 19932737
(43) Veröffentlichungstag der Anmeldung: 17.01.2001
(73) Patentinhaber: ALCATEL, 75008 Paris (FR)
(72) Erfinder: Hägebarth, Frank, 74366 Kirchheim (DE)
(74) Vertreter: Giebel-Roder, Marion

(56) Entgegenhaltungen:
- EP-A- 0 887 782
- DE-A- 19 824 587
- FR-A- 2 761 837
- PATENT ABSTRACTS OF JAPAN vol. 1998, no. 14, 31. Dezember 1998 (1998-12-31) & JP 10 260047 A (MATSUSHITA ELECTRIC IND CO LTD), 29. September 1998 (1998-09-29)
- PATENT ABSTRACTS OF JAPAN vol. 1999, no. 08, 30. Juni 1999 (1999-06-30) & JP 11 085011 A (DENSO CORP), 30. März 1999 (1999-03-30)
- PATENT ABSTRACTS OF JAPAN vol. 1998, no. 09, 31. Juli 1998 (1998-07-31) & JP 10 103986 A (MATSUSHITA ELECTRIC IND CO LTD), 24. April 1998 (1998-04-24)
- PATENT ABSTRACTS OF JAPAN vol. 1998, no. 06, 30. April 1998 (1998-04-30) & JP 10 038591 A (NIPPON TELEGR &TELEPH CORP <NTT>), 13. Februar 1998 (1998-02-13)
- PATENT ABSTRACTS OF JAPAN vol. 1998, no. 04, 31. März 1998 (1998-03-31) & JP 09 319303 A (NEC HOME ELECTRON LTD), 12. Dezember 1997 (1997-12-12)

## Beschreibung

Die Erfindung betrifft ein Verfahren zur Positionsüberwachung eines Mobilfunk-Teilnehmers. Für Speditionen und andere mobile Dienstleistungsuntemehmen ist die Möglichkeit, die Position der Fahrzeuge beziehungsweise den Aufenthaltsort der mobilen Mitarbeiter zu ermitteln und zu überwachen von größter Bedeutung. Dies führte zur Entwicklung von sogenannten Tracking-Systemen. Der Mobilteil derartiger Systeme besteht im wesentlichen aus zwei Komponenten. Mittels eines GPS-Empfängers (Global Positioning System) wird satellitengestützt die aktuelle Position bestimmt. Ein Funksystem gewährleistet die Übermittlung der Positionsdaten an eine Zentrale, von der aus die Fahrzeuge überwacht werden. Nachteilig bei diesen Systemen ist neben der sehr kostenintensiven Ausrüstung auch deren Größe und Gewicht. Eine solche Tracking-Ausrüstung ist daher nur für größere Speditionen rentabel. Für Privatanwendungen - beispielsweise im privaten Fahrzeug - ist die Tracking-Ausrüstung erheblich zu teuer. Eine Personenzuordnung bei Nutzung außerhalb eines Fahrzeuges ist darüber hinaus auch wegen der Größe und des Gewichtes der Ausrüstung ausgeschlossen.

Der Erfindung liegt die Aufgabe zugrunde, die oben genannten Nachteile zu beseitigen und ein Verfahren anzugeben, welches ein äußerst preiswertes Tracking von Fahrzeugen oder Personen bei geringen Genauigkeitsanforderungen gestattet.

Die Aufgabe wird mit den kennzeichnenden Merkmalen des Anspruchs 1 gelöst. Eine Komponente des Mobilfunknetzes stellt fest, in welcher Mobilfunkzelle des Netzes sich ein bestimmter Mobilfunk-Teilnehmer gerade befindet. Dies ist eine elementare Funktion jedes Mobilfunkneztes. Sie setzt lediglich voraus, daß das betreffende Endgerät eingeschaltet ist und eine Netzverbindung besteht. Die Positionsdaten der Moblfunkzelle werden vermittels IN-Server (Intelligent Network) und WEB-Server auf einer WEB-Seite des Internet dargestellt. Als Positionsdaten können beispielsweise die Mittelkoordinaten der Mobilfunkzelle verwendet werden. Die Genauigkeit, das heißt, die Auflösung des Trackings hängt dabei von der Größe der vorhandenen Mobilfunkzellen ab. Im ländlichen beziehungsweise dünn besiedelten Raum sind die Mobilfunkzellen gewöhnlich größer, als in Ballungszentren. Deshalb ist in Ballungszentren und Großstädten die Auflösung entsprechend höher. Insbesondere in Ballungszentren ist aufgrund erhöhter Teilnehmerdichten zukünftig zunehmend eine Verkleinerung der Funkzellen in Richtung Mikrozellen zu erwarten. Deshalb wird hier die Auflösung des beanspruchten "Online-Mobilfunk-Tracking" weiter steigen. Dieses Tracking-Verfahren stellt ein zusätzliches attraktives Leistungsmerkmal für Mobilfunknetze dar. Dem Nutzer steht hiermit ein äußerst einfaches und preiswertes Tracking-Verfahren zur Verfügung, welches sich selbst für Privatanwendungen eignet. Die Genauigkeit des Tracking dürfte für viele Anwendungen vollkommen ausreichend sein.

Eine in Anspruch 2 charakterisierte vorteilhafte Ausführungsform basiert auf der grafischen Darstellung der Positionsdaten auf dem Hintergrund einer Landkarte. Dabei können die Positionsdaten eines bestimmten Zeitraumes, beispielsweise der letzten 24 Stunden, mit Pfeilen, die die Bewegungsrichtung angeben, dargestellt werden.

Die Darstellung der Positionsdaten durch den WEB-Server wird gemäß Anspruch 3 durch IN-Anruf (Intelligent Network) aktiviert und deaktiviert. Dazu kann vorgesehen sein, daß der Mobilfunk-Teilnehmer einen neuen Dienst "Online-Mobilfunk-Tracking" gebucht hat, wobei nur der Mobilfunk-Teilnehmer selbst oder ein Berechtigter die Aktivierung beziehungsweise Deaktivierung durch Wahl einer bestimmten Ziffernfolge (IN-Anruf) auslösen kann.

Durch Anspruch 4 wird der Nutzerkreis der WEB-Seite eingeschränkt. Auf diese Weise werden die Aufenthaltsorte der Tracking-Teilnehmer vor Mißbrauch dieser Informationen geschützt. Die Identifizierbarkeit des Tracking-Teilnehmers kann zusätzlich durch Verschlüsselung oder gänzlichen Wegfall biographischer Daten auf den WEB-Seiten erschwert werden.

Gemäß Anspruch 5 wird der Nutzerkreis durch Vorgabe einer ID und eines Paßwortes eingeschränkt. Zum Abfragen der Tracking-Informationen ruft der Nutzer eine bestimmte Seite im Internet auf. Diese Seite läßt sich nur mit Hilfe der ID- und des zugehörigen Paßwortes öffnen. Die ID und das Paßwort werden vorzugsweise von der zu überwachenden Person vergeben.

Die Vorgabe der ID und des Paßwortes erfolgt gemäß Anspruch 6 vorteilhafterweise mit Hilfe des IN-Servers. Vorzugsweise können ID und Paßwort nur von der zu überwachenden Person selbst durch Wahl einer nur dieser Person bekannten Ziffernfolge (IN-Anruf) geändert werden. Sowohl bei privatem als auch bei dienstlichem Gebrauch kann auf diese Weise der Kreis der Zugangsberechtigten zu den entsprechenden WEB-Seiten neu festgelegt werden, indem nur dieser Personenkreis über die neue ID und das neue Paßwort informiert werden. Ein aus einer Speditionsfirma ausscheidender Mitarbeiter kann somit auf einfache Weise aus dem Kreis der Zugangsberechtigten ausgeschlossen werden.

Ein IN-Server zur Durchführung des Verfahrens kann mit den Merkmalen des Anspruchs 7 ausgestattet sein. Dabei fungiert der IN-Server quasi als Relaisstation zur Weiterleitung der Positionsdaten der jeweiligen Mobilfunkzelle an den WEB-Server. Denkbar wäre jedoch auch eine direkte Übermittlung der Positionsdaten von dem Endgerät des Mobilfunk-Teilnehmers an den WEB-Server, wobei der IN-Server dann lediglich noch einem IN-Anruf die Verbindung herstellt und nach einem weiteren IN-Anruf diese Verbindung wieder unterbricht.

Gemäß Anspruch 8 ist der IN-Server zusätzlich mit Aktivierungs-/Deaktivierungsmïtteln, die den WEB-Server beaufschlagen, ausgestattet. Diese Maßnahme erlaubt dem Mobilfunk-Teilnehmer, sich aus dem Tracking-Verfahren auszuklinken und sein Mobilfunk-Endgerät ohne Positionsüberwachung zu benützen. Eine solche Aktivierung und Deaktivierung ist jedoch entbehrlich, wenn das Mobilfunk-Endgerät zu jeder Benutzungszeit auch als Tracking-Instrument genutzt werden soll. Das könnte insbesondere für ausschließlich dienstlich genutzten Mobilfunk-Endgeräte von Speditionsfirmen vorgesehen sein. Die Überwachungsfunktion beginnt dann mit dem Einschalten des Mobilfunk-Endgerätes und endet mit dessen Ausschalten. Die Speditionsfirma hätte somit auch eine Kontrolle darüber, daß das Mobilfunk-Endgerät nicht außerhalb der Dienststunden für private Zwecke genutzt wird.

Weiterhin kann der IN-Server gemäß Anspruch 9 für die Festlegung des Kreises der Zugangsberechtigten zu der WEB-Seite genutzt werden.

Ein WEB-Server zur Durchführung des Verfahrens und im Zusammenwirken mit dem IN-Server ist gemäß einer in Anspruch 10 gekennzeichneten vorteilhaften Ausführungsform mit Mitteln zur Aufbereitung der Positionsdaten und Ansteuerung der WEB-Seite ausgestattet. Dazu hat der WEB-Server vorzugsweise Zugriff auf digital gespeicherte Straßendaten und gegebenenfalls Topographie-Daten, die in Abhängigkeit von den ermittelten Positionsdaten herausgesucht und auf der WEB-Seite in einer Graphik dargestellt werden, der die Positionsdaten, beispielsweise in Form von Wegpunkten überlagert werden.

Die Erfindung wird nachfolgend anhand eines schematisch dargestellten Ausführungsbeispieles näher erläutert.

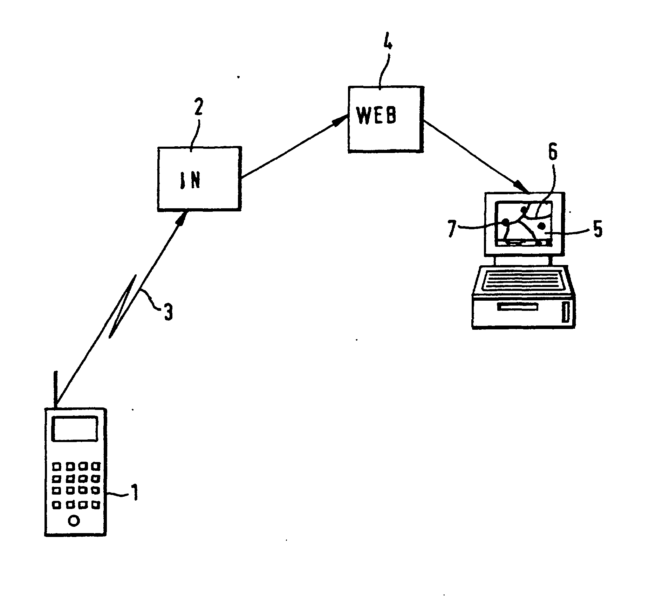

Die einzige Figur zeigt die wesentlichen Komponenten eines Tracking-Systems. Das Endgerät 1 eines Mobilfunk-Teilnehmers ist dabei mit einem IN-(Intelligent Network)Server (2) über Funk (3) verbindbar. Der IN-Server 2 beaufschlagt einen WEB-Server 4, welcher wiederum WEB-Seiten 5 als Internetapplikation erstellt. Auf der WEB-Seite 5 werden Straße 6 eines bestimmten Gebietes und die ungefähren Positionsdaten des Endgerätes 1 in Form von Wegpunkten 7 dargestellt. Dazu werden die Mobilfunk-Zellen ausgewertet, in denen der Mobilfunk-Teilnehmer sich gerade aufhält. Die Daten dieser Mobilfunk-Zellen, die als Positionsdaten zur Veranschaulichung der Wegpunkte 7 dienen, sind bei jedem Mobilfunk-Netz für jeden Mobilfunk-Teilnehmer jederzeit verfügbar. Auf diese Daten greift der IN-Server 2 zurück und übermittelt diese an den WEB-Server 4. Auf diese Weise ergibt sich ein Tracking-Verfahren, das für den Nutzer keinerlei Installation einer speziellen Ausrüstung erforderlich macht. Die zu überwachende Person muß lediglich im Besitz eines Mobilfunk-Endgerätes sein, während auf der Überwachungsseite lediglich ein Internet-Zugang erforderlich ist. Aus Datenschutzgründen ist der Zugang zu der entsprechenden WEB-Seite 5 ID- und paßwortgeschützt. ID und Paßwort können nur von dem Mobilfunk-Teilnehmer und/oder bestimmten berechtigten Personen via IN-Server 2 vorgegeben und geändert werden. Außerdem kann vorgesehen sein, daß die Aktivierung und die Deaktivierung des Tracking-Verfahrens ebenfalls via IN-Server 2 an den WEB-Server 4 weitergegeben wird.

Die Erfindung beschränkt sich nicht auf das vorstehend angegebene Ausführungsbeispiel. Vielmehr ist eine Anzahl von Varianten denkbar, welche auch bei grundsätzlich anders gearteter Ausführung von den Merkmalen der Erfindung Gebrauch machen.

## Patentansprüche

1. Verfahren zur Positionsüberwachung eines Mobilfunk-Teilnehmers, **dadurch gekennzeichnet, daß** die Positionsdaten der Mobilfunk-Zelle, in der sich der Mobilfunk-Teilnehmer gerade befindet, über einen IN(Intelligent Network)-Server (2) an einen WEB-Server (4) des Internet weitergeleitet, aufbereitet und auf einer WEB-Seite (5) dargestellt werden.

2. Verfahren nach Anspruch 1, **dadurch gekennzeichnet, daß** die Positionsdaten als Wegpunkte (7) auf dem Hintergrund einer Landkarte dargestellt werden.

3. Verfahren nach einem der vorangehenden Ansprüche, **dadurch gekennzeichnet, daß** der WEB-Server (4) durch IN-(Intelligent Network)-Anruf aktiviert und deaktiviert wird.

4. Verfahren nach einem der vorangehenden Ansprüche, **dadurch gekennzeichnet, daß** die WEB-Seite (5) nur einem bestimmten Nutzerkreis zugänglich gemacht wird.

5. Verfahren nach Anspruch 4, **dadurch gekennzeichnet, daß** der Mobilfunk-Teilnehmer oder ein Berechtigter durch Vorgabe einer ID und eines Paßwortes den Nutzerkreis bestimmt.

6. Verfahren nach Anspruch 5, **dadurch gekennzeichnet, daß** die Vorgaben der ID und des Paßwortes durch IN(Intelligent Network)-Anruf und Wahl einer entsprechenden Ziffernfolge erfolgt.

7. IN-Server (2) zur Durchführung des Verfahrens nach einem der vorangehenden Ansprüche mit
- erstern Mitteln zur Feststellung der Positionsdaten der Mobilfunk-Zelle, in der sich der Mobilfunk-Teilnehmer gerade befindet und mit
- zweiten Mittieln zur Weiterleitung der Positionsdaten an den WEB-Server (4).

8. IN-Server nach Anspruch 7, **gekennzeichnet durch** Aktivierungs-/Deaktivierungsmittel, die den WEB-Server (4) beaufschlagen.

9. IN-Server (2) nach einem der Ansprüche 7 oder 8, **gekennzeichnet durch** dritte Mittel zur ID-/Paßwort-Entgegennahme und Weiterleitung an eine der WEB-Seite (5) zugeordnete Zugangsberechtigungseinrichtung.

10. WEB-Server (4) zur Durchführung des Verfahrens und im Zusammenwirken mit dem IN-Server (2) nach einem der vorangehenden Ansprüche, **gekennzeichnet durch** Mittel zur, insbesondere grafischen, Aufbereitung empfangener Positionsdaten und Ansteuerung einer bestimmten WEB-Seite (5) des Internet zur Veranschaulichung der aufbereiteten Positionsdaten.

## Claims

1. Method of monitoring the position of a mobile communication subscriber, **characterized in that** the position data of the mobile communication cell in which the mobile communication subscriber currently is, is passed on via an IN (Intelligent Network) server (2) to an Internet Web server (4), processed and represented on a Web page (5).

2. Method according to Claim 1, **characterized in that** the position data is represented as route points (7) on the background of a map.

3. Method according to one of the preceding claims, **characterized in that** the Web server (4) is activated and deactivated by an IN (Intelligent Network) call.

4. Method according to one of the preceding claims, **characterized in that** the Web page (5) is made accessible only to a specified user group.

5. Method according to Claim 4, **characterized in that** the mobile communication subscriber or an authorised person specifies the user group by giving an ID and password.

6. Method according to Claim 5, **characterized in that** the ID and password are given by calling the IN (Intelligent Network) and dialling a corresponding digit sequence.

7. IN server (2) to carry out the method according to one of the preceding claims, with
- first means for establishing the position data of the mobile communication cell in which the mobile communication subscriber currently is, and with
- second means for passing on the position data to the Web server (4).

8. IN server according to Claim 7, **characterized by** activation/deactivation means which affect the Web server (4).

9. IN server (2) according to one of Claims 7 or 8, **characterized by** third means for accepting the ID and password and passing them on to an access authorisation facility which is associated with the Web page (5).

10. Web server (4) to execute the method and work with the IN server (2) according to one of the preceding claims, **characterized by** means for processing, particularly graphically, received position data, and controlling a specified Internet Web page (5) to illustrate the processed position data.

## Revendications

1. Procédé pour contrôler la position d'un possesseur de téléphone mobile, **caractérisé en ce que** les données de position de la cellule de téléphonie mobile, dans laquelle le possesseur d'un téléphone portable se trouve précisément, sont transmises par un serveur IN (Intelligent Network) (2) à un serveur WEB (4) d'Internet, préparées et présentées sur une page WEB (5).

2. Procédé selon la revendication 1, **caractérisé en ce que** les données de position sont présentées sous la forme de points de trajet (7) sur l'arrière-plan d'une carte géographique.

3. Procédé selon l'une quelconque des revendications précédentes, **caractérisé en ce que** le serveur WEB (4) est activé et désactivé par un appel IN (Intelligent Network).

4. Procédé selon l'une quelconque des revendications précédentes, **caractérisé en ce que** la page WEB (5) est rendue accessible seulement à un groupe défini d'utilisateurs.

5. Procédé selon la revendication 4, **caractérisé en ce que** le possesseur de téléphone portable ou une personne autorisée détermine le groupe d'utilisateurs par la spécification d'une identification et d'un mot de passe.

6. Procédé selon la revendication 5, **caractérisé en ce que** les spécifications de l'identification et du mot de passe s'effectuent par l'appel IN (Intelligent Network) et le choix d'une succession de chiffres correspondante.

7. Serveur IN (2) pour l'application du procédé selon l'une quelconque des revendications précédentes avec
- des premiers moyens pour la détermination des données de position de la cellule de téléphonie mobile, dans laquelle le possesseur de téléphone portable se trouve précisément et avec
- des seconds moyens pour la transmission des données de position au serveur WEB (4).

8. Serveur IN selon la revendication 7, **caractérisé par** des moyens d'activation/désactivation qui sollicitent le serveur WEB (4).

9. Serveur IN (2) selon l'une quelconque des revendications 7 ou 8, **caractérisé par** des troisièmes moyens pour la réception de l'identification et du mot de passe et l'acheminement à un appareil d'autorisation d'accès attribué à la page WEB (5).

10. Serveur WEB (4) pour la mise en oeuvre du procédé et en interaction avec le serveur IN (2) selon l'une quelconque des revendications précédentes, **caractérisé par** des moyens pour la préparation, en particulier graphique de données de position reçues et la commande d'une page WEB (5) définie d'Internet pour l'illustration des données de position préparées.
